# EUROPÄISCHE PATENTSCHRIFT

(11) **EP 1 467 228 B1**
(45) Veröffentlichungstag und Bekanntmachung des Hinweises auf die Patenterteilung: **19.10.2005**
(21) Anmeldenummer: 04001882.2
(22) Anmeldetag: 29.01.2004
(51) Int. Cl.: G01V 8/14, F16P 3/14, G01B 11/27

(54) **Optoelektronische Zugangsabsicherung**
Optoelectronic access control device
Système optoélectronique de control d'accès

(30) Priorität: 02.04.2003 DE 10314852
(43) Veröffentlichungstag der Anmeldung: 13.10.2004
(73) Patentinhaber: SICK AG, 79183 Waldkirch (DE)
(72) Erfinder: Henkel, Olaf, 79276 Reute (DE)
(74) Vertreter: Ludewigt, Christoph

(56) Entgegenhaltungen:
- EP-A- 0 967 583
- DE-A- 19 533 044
- DE-A- 19 924 470
- US-A- 4 117 319

## Beschreibung

Die Erfindung betrifft eine optoelektronische Zugangsabsicherung zur Überwachung eines Schutzbereiches mit zumindest einem Lichtsender, einem Lichtempfänger sowie einer Umlenkeinheit mit wenigstens einem ersten und einem zweiten Reflexionselement, wobei ein von dem Lichtsender entlang des Schutzbereiches ausgesandtes Sendelichtbündel auf das erste Reflektionselement auftrifft, dabei zum zweiten Reflektionselement gelenkt wird und anschließend wieder entlang des Schutzbereiches zu dem Lichtempfänger umgelenkt wird.

Der Begriff "Licht" ist dabei nicht auf das sichtbare Licht beschränkt. Unter "Licht" sind allgemein elektromagnetische Strahlen, also UV-Licht, IR-Licht sowie sichtbares Licht zu verstehen, welches üblicherweise für den Betrieb optoelektronischer Sensoren eingesetzt werden können.

Derartige optoelektronische Zugangsabsicherungen werden beispielsweise am Rand eines Gefahrenbereiches einer Werkzeugmaschine eingesetzt, um gegebenenfalls das Betreten dieses Gefahrenbereiches zu detektieren und ein optisches oder akustisches Warnsignal bzw. ein Abschaltsignal für die Werkzeugmaschine auszulösen.
Die optoelektronische Zugangsabsicherung erzeugt somit einen Schutzbereich, dessen Funktion vergleichbar mit einer Absperrleine ist. Im einfachsten Fall befinden sich dazu am Anfang und am Ende des Schutzbereiches ein Lichtsender, der ein Sendelichtbündel in den Schutzbereich aussendet, während am Ende des Schutzbereiches ein Lichtempfänger das ankommende Sendelichtbündel empfängt, in eine elektrische Größe umwandelt und einer Auswerteschaltung zuführt. Die Auswerteschaltung ist somit in der Lage zu erkennen, ob das Sendelichtbündel innerhalb des Schutzbereiches unterbrochen wurde oder nicht. Vergleichbar einer einzelnen Absperrleine kann auch ein einzelnes Sendelichtbündel im Schutzbereich überschritten werden. Um dies zu verhindern, werden deshalb meist zwei oder mehrere Sendelichtbündel mit einem endlichen Strahlabstand zueinander durch den Schutzbereich geführt. Bei diesen Lösungen, wo sich der bzw. die Lichtsender am Anfang des Schutzbereiches und der bzw. die Lichtempfänger am Ende des Schutzbereiches befinden, sind auf beiden Seiten des Schutzbereiches elektrische Installationen notwendig, die einen erhöhten Montageaufwand und damit verbunden zusätzliche Kosten verursachen. Deshalb gibt es Lösungen, bei denen sich der Lichtsender und der Lichtempfänger in einem gemeinsamen Gehäuse an einem Ende des Schutzbereiches befinden, während am anderen Ende des Schutzbereiches ein Retroreflektor angeordnet ist. So ist aus der DE 199 24 470 eine Reflexionslichtschranke bekannt, bei welcher der Lichtsender und der Lichtempfänger unmittelbar nebeneinander angeordnet sind und am Ende des Objektraumes ein Reflektor zur Lichtumkehr angebracht ist. Der "Strahlabstand" zwischen ausgesendetem und reflektiertem Lichtstrahl ist dabei jedoch sehr gering. Aus der EP 0 967 583 ist ebenfalls eine Lösung bekannt, bei der statt eines Retroreflektors eine spezielle Umlenkeinheit zum Einsatz kommt. Hierbei hat die Umlenkeinheit die Aufgabe, ein vom Lichtsender kommendes Sendelichtbündel zunächst um einen vorgegebenen Stahlabstand zu versetzen und schließlich wieder entlang des Schutzbereiches zum Lichtempfänger zu lenken. Auf diesem Wege ist es möglich, den Schutzbereich mit einem Lichtsender und einem Lichtempfänger mit zwei zueinander beabstandeten Sendelichtbündeln zu durchstrahlen, so dass die gezielte oder unbewusste Gefahr der Überbrückung einer einstrahligen optoelektronischen Zugangsabsicherung verhindert oder zumindest deutlich reduziert wird.
Für kurze Schutzbereiche, d. h. bis zu einem Abstand von ca. 1,5 m, ist nach der DE 195 33 044 eine zweistrahlige Lichtschranke bekannt, bei der ein erster paralleler Lichtstrahl nach exakter Reflexion an einem Tripelspiegel wieder als paralleler Lichtstrahl versetzt zurück reflektiert wird.
In der US 4,117,319 ist ein Justiersystem für Laser beschrieben, bei welchem zwischen zwei exakt justierbaren Spiegelelementen ein Laserstahl mehrfach reflektiert wird.

Ein Nachteil dieser bekannten optoelektronischen Zugangsabsicherung der beschriebenen Art besteht insbesondere bei großer Längsausdehnung des Schutzbereiches und geringem Stahlabstand, weil die Lichtsender / Lichtempfänger und gegebenenfalls der Reflektor bzw. die Umlenkeinheit an den Enden des Schutzbereiches optisch aufeinander ausgerichtet, d. h. justiert sein müssen. Um die Justage zu erleichtern, wird eine kegelförmige Sendelichtkeule in den Schutzbereich ausgesendet und der Lichtempfänger ist in der Lage, Licht, das innerhalb einer kegelförmigen Empfangslichtkeule einfällt, aufzunehmen. Die Sendelichtkeule ist so dimensioniert, dass die Eintrittsfläche der Umlenkeinheit überstrahlt wird. Ebenso ist die Empfangslichtkeule so dimensioniert, dass die Austrittsfläche der Umlenkeinheit auch dann vom Lichtempfänger gesehen wird, wenn diese nicht exakt auf die optische Achse des Lichtempfängers ausgerichtet ist. Die Sendelichtkeule und die Empfangslichtkeule müssen jedoch bei der bevorzugten Variante mit Umlenkeinheit und Zweifachdurchstrahlung so klein sein, dass sich diese innerhalb des Schutzbereiches nicht überlappen, weil sonst die sichere Funktion der Zugangsabsicherung beeinträchtigt werden kann.

Die Beeinträchtigung der Funktion kann bei einer Überlappung der Sendelichtkeule und der Empfangslichtkeule dann zustande kommen, wenn sich innerhalb des Überlappungsbereiches zum Beispiel ein Spiegel befindet, der das einfallende Sendelichtbündel zurückwirft und dieses, weil der Spiegel dann auch innerhalb der Empfangslichtkeule ist, auf den Lichtempfänger gelangt. Die wirksame Länge des Schutzbereiches ist dadurch verkürzt, d. h. die Zone zwischen dem Spiegel und der Umlenkeinheit ist ungesichert.

Die deshalb notwendige Einschränkung der Sendelicht- und Empfangslichtkeule wiederum verursacht beim Einsatz der Zugangsabsicherung eine hohe Anforderung an die Justage der Lichtsender, weil diese exakt auf die Umlenkeinheit ausgerichtet sein müssen.

Der Erfindung liegt deshalb die Aufgabe zugrunde, eine optoelektronische Zugangsabsicherung der eingangs genannten Art zu schaffen, die sowohl den sicheren Betrieb auch bei geringem Strahlabstand gewährleistet, gleichzeitig aber einen größt möglichen Freiheitsgrad bei der Justage bzw. Montage zulässt.

Zur Lösung dieser Aufgabe sieht die Erfindung vor, dass die ausgesandte Sendelichtkeule und die vom Lichtempfänger aufgenommene Empfangslichtkeule ein Strahlungsprofil aufweist, dessen Ausdehnung in Richtung des Lichtbündelabstandes eine geringere Abmessung aufweist, als in der dazu rechtwinkligen Ausdehnung.

Diese maximale Aufweitung der Strahlkeulen vergrößert in vorteilhafter Weise die Winkelverfügbarkeit der optoelektronischen Zugangsabsicherung, so dass die Winkelausrichtung der Lichtsender / Lichtempfänger inklusive der Umlenkeinheit dadurch wesentlich vereinfacht ist.

Gleichzeitig kann auf diese Weise sichergestellt werden, dass sich die Sendelichtkeule und die Empfangslichtkeule innerhalb des Schutzbereiches nicht überschneiden, wodurch eine sichere Funktion der optoelektronischen Zugangsabsicherung gewährleistet ist.

Die Justierung kann somit vergleichsweise schnell durchgeführt werden und sie kann auch durch nicht eigens dafür geschultes Personal erfolgen. Außerdem ist die erfindungsgemäße optoelektronische Zugangsabsicherung flexibel in verschiedenartigen Umgebungsbedingungen einsetzbar, da die Auswirkungen von Schock-, Temperatur- oder Vibrationsbelastung im Bereich der Halterungen keine oder nur geringfügige Beeinträchtigungen hervorrufen.

Bei einer vorteilhaften Ausführungsform der Erfindung ist die Ausdehnung der Sendelichtkeule bzw. der Empfangslichtkeule in der Längs- und Querachse einstellbar ausgeführt. Dies kann zum Beispiel dadurch geschehen, dass durch eine Änderung der Blendengeometrie vor der Emissionsfläche des Lichtsenders, bzw. vor der lichtempfindlichen Fläche des Lichtempfängers, die Geometrie der Sendelichtkeule / Empfangslichtkeule veränderbar ist. Besonders vorteilhaft ist in diesem Zusammenhang die Verwendung von einstellbaren Spaltblenden, weil dadurch die Geometrie der Sendelichtkeule / Empfangslichtkeule kontinuierlich und stufenlos angepasst werden kann.
Dies ist besonders bei sehr kleinen Strahlabständen von Vorteil, weil die Sendelichtkeule und die Empfangslichtkeule so eingestellt werden können, dass sich diese innerhalb eines aktuellen Schutzbereiches gerade nicht überschneiden, wodurch einerseits eine sichere Funktion der optoelektronischen Zugangsabsicherung gewährleistet ist, andererseits die maximale Winkelverfügbarkeit für die Justage bzw. Montage zur Verfügung steht.

Die Erfindung wird beispielhaft anhand eines Ausführungsbeispieles unter Bezugnahme auf die Zeichnungen erläutert.
Es zeigen:
- Fig. 1: eine schematische Ansicht einer optoelektronischen Zugangsabsicherung mit zwei Strahlen und einer Umlenkeinheit.
- Fig. 2: eine perspektivische Ansicht einer Sendelichtkeule und einer Empfangslichtkeule der erfindungsgemäßen optoelektronischen Zugangsabsicherung.

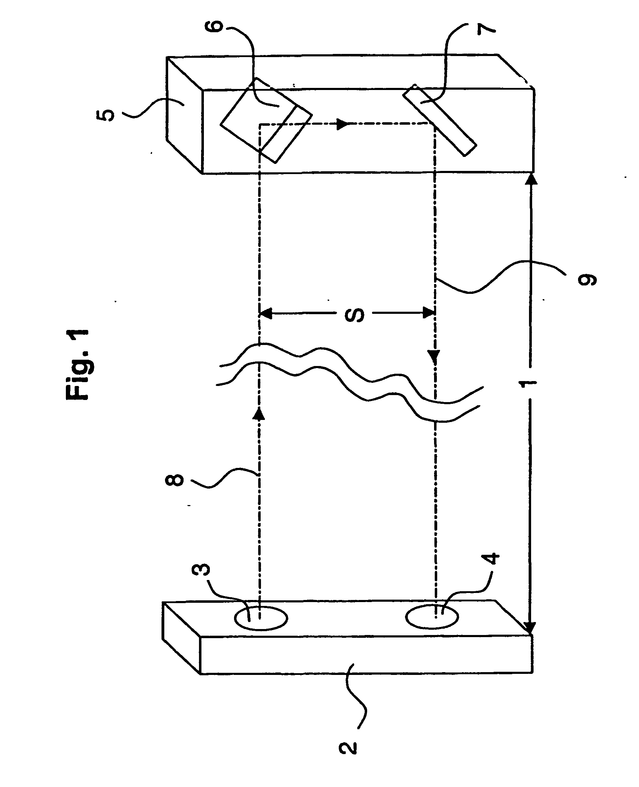

Fig. 1 zeigt an einem Ende eines Schutzbereiches 1, in einem gemeinsamen Gehäuse 2, einen Lichtsender 3 und einen Lichtempfänger 4. Am anderen Ende des Schutzbereiches 1 ist eine Umlenkeinheit 5 mit einem ersten Reflexionselement 6 und einem zweiten Reflexionselement 7 dargestellt. Von einem aus dem Lichtsender austretenden Sendelichtbündel ist hier nur seine optische Achse 8 gezeigt, welche den Schutzbereich 1 durchstrahlt und an dessen Ende auf das erste Reflexionselement 6 auftrifft. Am ersten Reflexionselement 6, das hier als ein Dachkantspiegel dargestellt ist, wird das Sendelichtbündel innerhalb der Umlenkeinheit 5 um ca. 90° umgelenkt und trifft sodann auf das zweite Reflexionselement 7, das die Form eines Planspiegels hat. Nach erneuter Umlenkung um ca. 90° tritt das Sendelichtbündel, hier dargestellt mit seiner optischen Achse 9, wieder in den Schutzbereich 1 ein. Zusammen bilden die beiden Reflexionselemente 6 und 7 somit einen Tripelspiegel, welcher das einfallende Sendelichtbündel, parallel versetzt um einen Strahlabstand S, wieder in seine Ausgangsrichtung zurückreflektiert. Die beiden Reflexionselemente 6 und 7 können auch, vergleichbar mit einem optischen Tripelreflektor, durch einen transparenten Kunststoff- oder Glaskörper realisiert werden. Nach abermaliger Durchstrahlung des Schutzbereiches 1 trifft zumindest ein Teil des ursprünglichen Sendelichtbündels auf den Lichtempfänger 4. Der Lichtempfänger wandelt die auftreffende optische Strahlung in eine elektrische Größe um und führt dieses Signal einer nicht dargestellten Auswerteschaltung zu. Die Auswerteschaltung ist in der Lage, aufgrund der am Lichtempfänger auftreffenden optischen Strahlung festzustellen, ob der Lichtweg vom Lichtsender 3, durch den Schutzbereich 1, über die Umlenkeinheit 5 und erneut zurück durch den Schutzbereich 1 zum Lichtempfänger 4 frei ist, oder von einem möglichen Objekt unterbrochen wird. Die Auswerteschaltung liefert sodann ein Ausgangssignal, in Abhängigkeit vom Zustand des Lichtweges, zur Ansteuerung eines Warnsignals, zur Abschaltung einer hinter dem Schutzbereich befindlichen Maschine oder dergleichen.

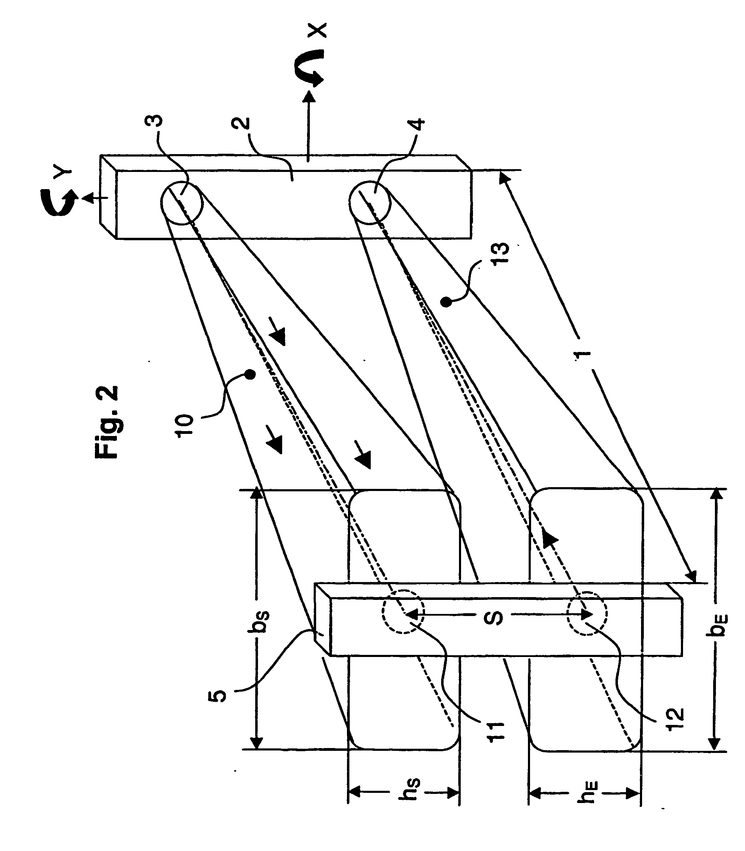

In der perspektivischen Darstellung der Fig. 2 sind in einem gemeinsamen Gehäuse 2 sowohl der Lichtsender 3 als auch der Lichtempfänger 4 dargestellt. Am gegenüberliegenden Ende des Schutzbereiches 1 ist die Umlenkeinheit 5 mit ihren beiden in Fig. 1 näher beschriebenen Reflexionselementen angeordnet. Die aus dem Gehäuse 2, beim Lichtsender 3 austretende Sendelichtkeule 10 hat in diesem Ausführungsbeispiel ein annähernd rechteckiges, sich mit zunehmendem Abstand vergrößerndes Strahlprofil. Am Ende des Schutzbereiches 1 hat es in der Richtung des Strahlabstandes S eine Höhe hₛ und in der dazu rechtwinkligen Achse eine Breite bₛ. Damit wird an der Umlenkeinheit 5 ein Lichteintrittsfenster 11 deutlich überstrahlt. Das Gehäuse 2 kann nun in seiner Achse y in positiver bzw. negativer Richtung soweit gedreht werden, bis das Lichteintrittsfenster 11 von der Sendelichtkeule 10 gerade noch ausgeleuchtet wird. Diese geometrischen Zusammenhänge sind auch auf eine Drehung des Gehäuses 2 um eine Achse X übertragbar.

Der Anteil der Sendelichtkeule 10, der über das Lichteintrittsfenster 11 in die Umlenkeinheit 5 gelangt, tritt - reduziert um geringe Verluste an den Reflexionselementen - durch ein Lichtaustrittsfenster 12 wieder aus der Umlenkeinheit 5 aus. Die besondere Anordnung der beiden Reflexionselemente zu einem Tripelspiegel in der Umlenkeinheit 5 stellt sicher, dass der aus dem Lichtaustrittsfenster 12 austretende Lichtbündelanteil exakt zum Lichtempfänger 4 gelangt. Der Lichtempfänger 4 kann diesen Lichtbündelanteil jedoch nur dann detektieren, wenn sich das Lichtaustrittsfenster 12 innerhalb der Empfangslichtkeule 13 befindet. Aus diesem Grunde ist das Strahlprofil der Sendelichtkeule und der Empfangslichtkeule annähernd gleich dimensioniert, d. h. auch die Empfangslichtkeule 13 hat in diesem Ausführungsbeispiel in einem Schnitt von der Umlenkeinheit 5 einen annähernd rechteckigen Querschnitt mit den Abmessungen b_{E} und h_{E}. Da für die maximal zulässige Winkelfreiheit bei der Justage des Gehäuses 2 immer die kleinere Abmessung des Querschnittes der Sende- bzw. Empfangskeule begrenzend ist, sind die beiden Querschnitte der Sende- und Empfangskeule vorzugsweise gleich groß, d. h. bₛ = b_{E} und hₛ = h_{E}.

Damit sich die beiden Sende- und Empfangskeulen innerhalb des Schutzbereiches 1 nicht überlappen und dadurch bei einem spiegelnden Objekt innerhalb des Überlappungsbereiches eine ungewollte Verkürzung des Schutzfeldes eintreten kann, ist die Bedingung h_{S} < S und h_{E} < S zwingend einzuhalten.

## Patentansprüche

1. Optoelektronische Zugangsabsicherung zur Überwachung eines Schutzbereiches (1) mit zumindest einem Lichtsender (3), einem Lichtempfänger (4), die in einem gemeinsamen Gehäuse (2) untergebracht sind und wenigstens einem ersten und einem zweiten Reflexionselement (6, 7), wobei ein Anteil der von dem Lichtsender (3) entlang des Schutzbereiches (1) ausgesandten Sendelichtkeule (10) auf das erste Reflexionselement (6) auftrifft, dabei zum zweiten Reflexionselement (7) gelenkt wird und anschließend um einen Strahlabstand (S) versetzt wieder entlang des Schutzbereiches (1) zu dem Lichtempfänger (4) umgelenkt wird, **dadurch gekennzeichnet, dass** die Sendelichtkeule (10) und die vom Lichtempfänger (4) aufgenommene Empfangslichtkeule (13) jeweils ein Strahlungsprofil aufweisen, dessen Ausdehnung in Richtung des Strahlabstandes (S) eine geringere Abmessung aufweist, als in der dazu rechtwinkligen Ausdehnung und dass sich die annähernd gleich dimensionierte Sendelichtkeule, bzw. die Empfangslichtkeule zweier benachbarter Lichtbündel, innerhalb des Schutzbereiches (1) nicht überlappen.

2. Optoelektronische Zugangsabsicherung nach Anspruch 1, **dadurch gekennzeichnet, dass** die Ausdehnung der Sendelichtkeule bzw. der Empfangslichtkeule in der Längs- und Querachse einstellbar sind.

3. Optoelektronische Zugangsabsicherung nach einem der vorhergehenden Ansprüche, **dadurch gekennzeichnet, dass** die Sendelichtkeule bzw. die Empfangslichtkeule annäherungsweise einen rechteckigen Querschnitt aufweisen.

4. Optoelektronische Zugangsabsicherung nach einem der vorhergehenden Ansprüche, **dadurch gekennzeichnet, dass** die Sendelichtkeule bzw. die Empfangslichtkeule in Ihrer Längs- und Querausdehnung stufenlos getrennt einstellbar sind.

## Claims

1. Optoelectronic access protection device for monitoring a protection zone (1), having at least one optotransmitter (3) and an optoreceiver (4) which are accommodated in a common housing (2), and at least one first and one second reflection element (6, 7), a fraction of the transmitted light lobe (10) emitted by the optotransmitter (3) along the protection zone (1) striking the first reflection element (6), being directed in this case to the second reflection element (7) and subsequently being deflected, in a fashion offset by one beam spacing (S), to the optoreceiver (4) along the protection zone (1) once again, **characterized in that** the transmitted light lobe (10) and the received light lobe (13) picked up by the optoreceiver (4) in each case have a beam profile whose extent has a lesser dimension in the direction of the beam spacing (S) than in the extent perpendicular thereto, and **in that** the approximately equally dimensioned transmitted light lobe, or the received light lobe of two neighbouring light bundles do not overlap inside the protection zone (1).

2. Optoelectronic access protection device according to Claim 1, **characterized in that** the extent of the transmitted light lobe and of the received light lobe can be set along the longitudinal and transverse axes.

3. Optoelectronic access protection device according to one of the preceding claims, **characterized in that** the transmitted light lobe and the received light lobe have approximately a rectangular cross section.

4. Optoelectronic access protection device according to one of the preceding claims, **characterized in that** the longitudinal and transverse extents of the transmitted light lobe and the received light lobe can be set separately in a continuous fashion.

## Revendications

1. Sécurité d'accès optoélectronique pour la surveillance d'une zone protégée (1), comportant au moins un émetteur de lumière (3), un récepteur de lumière (4), qui sont logés dans un boîtier commun (2), et au moins un premier et un deuxième élément de réflexion (6, 7), une partie du lobe de lumière d'émission (10) émis par l'émetteur de lumière (3) le long de la zone protégée (1) arrivant sur le premier élément de réflexion (6), étant en l'occurrence déviée vers le deuxième élément de réflexion (7) et étant ensuite à nouveau déviée le long de la zone protégée (1) vers le récepteur de lumière (4) en étant décalée d'un écartement de rayonnement (S), **caractérisée en ce que** le lobe de lumière d'émission (10) et le lobe de lumière de réception (13) reçu par le récepteur de lumière (4) présentent chacun un profil de rayonnement, dont l'extension en direction de l'écartement de rayonnement (S) a une dimension plus faible que dans l'extension perpendiculaire, et **en ce que** le lobe de lumière d'émission ou le lobe de lumière de réception dimensionnés approximativement de façon identique de deux faisceaux lumineux adjacents ne se chevauchent pas à l'intérieur de la zone protégée (1).

2. Sécurité d'accès optoélectronique selon la revendication 1, **caractérisée en ce que** l'extension du lobe de lumière d'émission ou du lobe de lumière de réception est réglable dans l'axe longitudinal et transversal.

3. Sécurité d'accès optoélectronique selon l'une des revendications précédentes, **caractérisée en ce que** la section transversale du lobe de lumière d'émission ou du lobe de lumière de réception est approximativement rectangulaire.

4. Sécurité d'accès optoélectronique selon l'une des revendications précédentes, **caractérisée en ce que** l'extension longitudinale et transversale du lobe de lumière d'émission ou du lobe de lumière de réception sont réglables séparément en continu.
